# EUROPEAN PATENT APPLICATION

(11) **EP 3 020 596 A1**
(43) Date of publication of application: **18.05.2016**
(21) Application number: 15189355.9
(22) Date of filing: 12.10.2015
(51) Int. Cl.: B60L 11/18, B60L 3/12

(54) **SYSTEM AND METHOD FOR PREDICTING DISTANCE TO EMPTY OF ELECTRIC VEHICLE**

(30) Priority: 14.11.2014 KR 20140158516
(71) Applicant: Hyundai Motor Company, Seoul 137-938 (KR)
(72) Inventor: NAM, Ho Uk, 461-872 Gyeonggi-do (KR); LEE, Jin Hyung, 156-815 Seoul (KR)
(74) Representative: Isarpatent

(57) **Abstract**

A system and method for predicting distance to empty of an electric vehicle are provided. The method includes storing 1~n past mileages in a memory and calculating standard deviation for the 1~n past mileages. A mileage is then predicted by discriminately reflecting the 1~n past mileages based on the standard deviation. Accordingly, the distance to empty is calculated by multiplying the predicted mileage and battery available energy.

## Description

### BACKGROUND

### (a) Technical Field

The present disclosure relates to a system and method for predicting distance to empty of an electric vehicle and more particularly, to a method for predicting distance to empty of an electric vehicle, which is capable of more accurately predicting the distance to empty by more accurately calculating an initial mileage using a standard deviation calculation.

### (b) Background Art

In general, a distance to empty (DTE) has to be provided to a driver through cluster as important driving information during the driving of the electric vehicle since a battery may be discharged as the DTE decreases. In addition to power consumed in a motor which is a driving power source of an electric vehicle, the power consumption etc., caused from the operation of an air conditioning system etc., has been utilized as essential information to predict the residual distance to empty of an electric vehicle, and in particular depending on the condition of a driving road, condition of driving uphill or driving downhill should also be considered.

Usually, the distance to empty of an electric vehicle may be predicted by the following logic.

Distance to empty [DTE (km)] = mileage [km/kWh] X battery available energy [kWh]

However, although the distance to empty may be predicted relatively accurately using the above logic, for the prediction of initial distance to empty after battery charge, the accurate prediction of the mileage needs to be prioritized.

Currently, the mileage prediction after battery charge mainly reflects the mileage just before a battery charge, and the initial distance to empty is calculated using the battery energy after charge and the predicted mileage after battery charge. However, when the distance to empty of the electric vehicle is calculated, it is calculated by simply reflecting information before mileage and thus substantial error may occur in the initial distance to empty when the electric vehicle drives with different driving pattern from just before driving pattern.

In other words, the substantial error may occur in the initial distance to empty since the driving pattern just after battery charge and the driving pattern just before battery charge are different. In other words, the substantial error inevitably occurs in the initial distance to empty since the mileage based on the driving pattern just after battery charge and the mileage based on the driving pattern just before battery charge are different.

The above information disclosed in this section is merely for enhancement of understanding of the background of the invention and therefore it may contain information that does not form the prior art that is already known in this country to a person of ordinary skill in the art.

### SUMMARY

The present invention provides a method for predicting distance to empty of an electric vehicle by more accurately calculating the distance to empty and more accurately predicting a necessary mileage for prediction of the distance to empty after battery charge through standard deviation calculation of past mileages stored in a memory.

In one aspect, the present invention provides a method for predicting distance to empty of an electric vehicle that may include: storing 1∼n past mileages in a memory; calculating standard deviation for the 1∼n past mileages; predicting a mileage by discriminately reflecting the 1∼n past mileages based on the standard deviation; and calculating distance to empty by multiplying the predicted mileage and battery available energy. In particular, in the predicting of a mileage by discriminately reflecting the 1∼n past mileages based on the standard deviation, when the standard deviation is greater than an intermediate level, the mileage may be predicted by minimizing reflection ratio of a recent mileage of the 1∼n past mileages.

Further, in the prediction of a mileage, the mileage may be predicted as mean value for the 1∼n past mileages. In addition, when the standard deviation is the intermediate level, the mileage may be predicted by minimizing the reflection ratio of the past mileage of the 1∼n past mileages and simultaneously maximizing the reflection ratio of the recent mileage. Additionally, when the standard deviation is less than the intermediate level, the mileage may be predicted by maximizing the reflection ratio of the past mileage of the 1∼n past mileages. When the standard deviation is a minimum value, the mileage may be predicted as a mean value for the 1∼n past mileages.

### BRIEF DESCRIPTION OF THE DRAWINGS

The above and other features of the present invention will now be described in detail with reference to exemplary embodiments thereof illustrated the accompanying drawings which are given herein below by way of illustration only, and thus are not limitative of the present invention, and wherein:
FIG. 1 is a flow chart illustrating a method for predicting distance to empty of an electric vehicle according to an exemplary embodiment of the present invention;
FIG. 2 is a graph illustrating a map data of a reflection ratio of a mileage for a method for predicting distance to empty of an electric vehicle according to an exemplary embodiment of the present invention;
FIGS. 3A-3C are graphs illustrating a mileage calculation using standard deviation of past mileages, as an exemplary embodiment of a method for predicting distance to empty of an electric vehicle according to an exemplary embodiment of the present invention; and
FIG. 4 is a graph illustrating a calculation example of the distance to empty after driving on an actual road by applying a method for predicting distance to empty of an electric vehicle according to an exemplary embodiment of the present invention and an existing method.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment. In the figures, reference numbers refer to the same or equivalent parts of the present invention throughout the several figures of the drawing.

### DETAILED DESCRIPTION

It is understood that the term "vehicle" or "vehicular" or other similar term as used herein is inclusive of motor vehicles in general such as passenger automobiles i ncluding sports utility vehicles (SUV), buses, trucks, various commercial vehicles, wat ercraft including a variety of boats and ships, aircraft, and the like, and includes hybr id vehicles, electric vehicles, plug-in hybrid electric vehicles, hydrogen-powered vehicl es and other alternative fuel vehicles (e.g. fuels derived from resources other than pet roleum). As referred to herein, a hybrid vehicle is a vehicle that has two or more s ources of power, for example both gasoline-powered and electric-powered vehicles.

Although exemplary embodiment is described as using a plurality of units to perform the exemplary process, it is understood that the exemplary processes may als o be performed by one or plurality of modules. Additionally, it is understood that th e term controller/control unit refers to a hardware device that includes a memory and a processor. The memory is configured to store the modules and the processor is s pecifically configured to execute said modules to perform one or more processes whic h are described further below.

Furthermore, control logic of the present invention may be embodied as non-tr ansitory computer readable media on a computer readable medium containing executab le program instructions executed by a processor, controller/control unit or the like. E xamples of the computer readable mediums include, but are not limited to, ROM, RA M, compact disc (CD)-ROMs, magnetic tapes, floppy disks, flash drives, smart cards and optical data storage devices. The computer readable recording medium can also be distributed in network coupled computer systems so that the computer readable me dia is stored and executed in a distributed fashion, e.g., by a telematics server or a C ontroller Area Network (CAN).

The terminology used herein is for the purpose of describing particular embod iments only and is not intended to be limiting of the invention. As used herein, the singular forms "a", "an" and "the" are intended to include the plural forms as well, unless the context clearly indicates otherwise. It will be further understood that the t erms "comprises" and/or "comprising," when used in this specification, specify the pre sence of stated features, integers, steps, operations, elements, and/or components, but d o not preclude the presence or addition of one or more other features, integers, steps, operations, elements, components, and/or groups thereof. As used herein, the term " and/or" includes any and all combinations of one or more of the associated listed ite ms.

Unless specifically stated or obvious from context, as used herein, the term "a bout" is understood as within a range of normal tolerance in the art, for example wit hin 2 standard deviations of the mean. "About" can be understood as within 10%, 9 %, 8%, 7%, 6%, 5%, 4%, 3%, 2%, 1%, 0.5%, 0.1%, 0.05%, or 0.01% of the stated value. Unless otherwise clear from the context, all numerical values provided herein are modified by the term "about."

Hereinafter reference will now be made in detail to various exemplary embodiments of the present invention, examples of which are illustrated in the accompanying drawings and described below. While the invention will be described in conjunction with exemplary embodiments, it will be understood that present description is not intended to limit the invention to those exemplary embodiments. On the contrary, the invention is intended to cover not only the exemplary embodiments, but also various alternatives, modifications, equivalents and other embodiments, which may be included within the spirit and scope of the invention as defined by the appended claims.

As described above, distance to empty [DTE (km)] of an electric vehicle may be calculated using "mileage [km/kWh] X battery available energy [kWh]", and for calculation of initial distance to empty after battery charge, the more accurate mileage prediction should be prioritized.

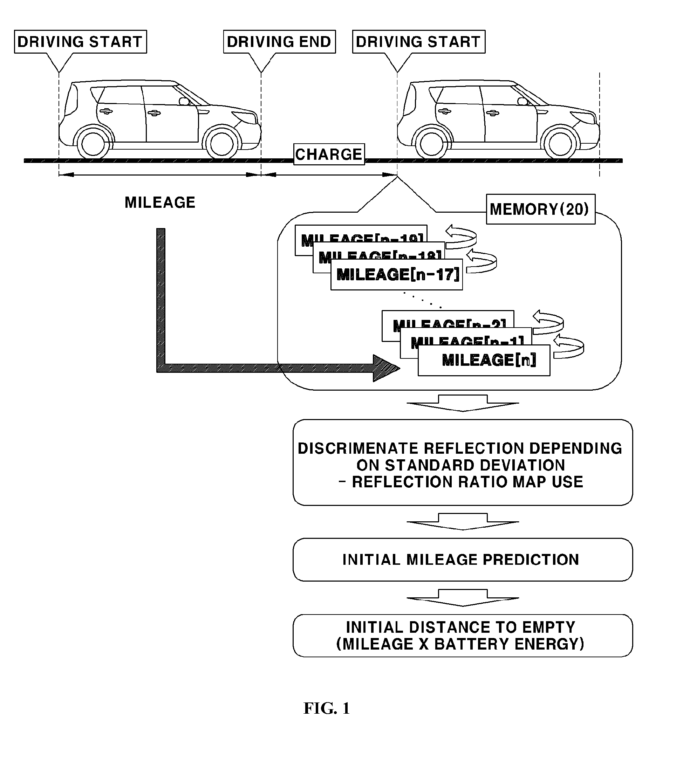

FIG.1 attached is a flow chart illustrating a method for predicting distance to empty of an electric vehicle according to an exemplary embodiment of the present invention. The method as described herein below may be executed by a controller having a memory and a processor. First, a past mileage from a driving start point to a driving end point may be stored in a memory, after battery charge of an electric vehicle (e.g., after the vehicle battery has been charged). In other words, 1∼n past mileages may be stored in the memory.

Next, standard deviation for the 1∼n past mileages may be calculated. As is well known, the standard deviation is defined as the square root of the arithmetic mean value of the squared deviations. Accordingly, the standard deviation for the past mileage may be obtained through a process of obtaining a mean value for 1∼n past mileages, a process of obtaining each deviation by subtracting the mean value from each of the 1∼n past mileages; a deviation squaring process of squaring all the deviations, respectively; a squared deviation summing process of summing all squared deviations; a variance process of dividing a sum of squares of deviations by n which is a number of the past mileages; and a process of obtaining a square root of the variance.

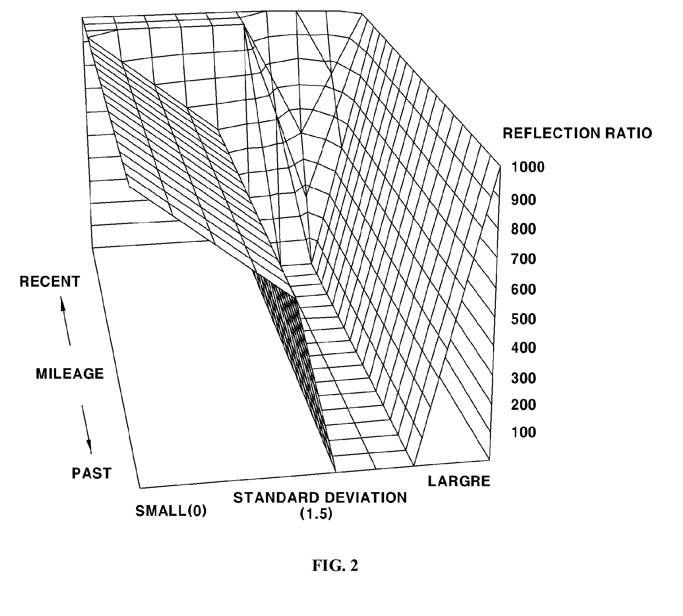

Further, the mileage may be predicted by discriminately reflecting the 1∼n past mileages based on the standard deviation, and the mileage may specifically be predicted using a mileage reflecting map data. For example, as shown in FIG. 2, the standard deviation may be obtained based on the past mileage, and the mileage may be predicted using the mileage reflecting map generated (e.g., formulated, compiled, etc.) in advance through experiments regarding the reflection ratio of the recent mileage and the reflection ratio of the past mileage of the past mileages based on the standard deviation.

The exemplary embodiment of predicting a mileage by discriminately reflecting the 1∼n past mileages based on the standard deviation is as follows: When the standard deviation is greater (e.g., by about 1.5) than intermediate level (e.g., 1.0), the mileage may be predicted by minimizing the reflection ratio of recent mileage of the 1∼n past mileages.

In other words, when the standard deviation is greater than the intermediate level, an initial mileage may be determined using the mileage reflecting map mapped to minimize the reflection ratio of recent mileage of the 1∼n past mileages. For example, when the standard deviation is substantially high, the mileage may be determined to be rapidly changed since the recent driving pattern of the driver is different from the past driving pattern of the driver, whereby the initial mileage may be determined from the mileage reflecting map where the reflection ratio for the recent mileage of the 1∼n past mileages may be minimized..

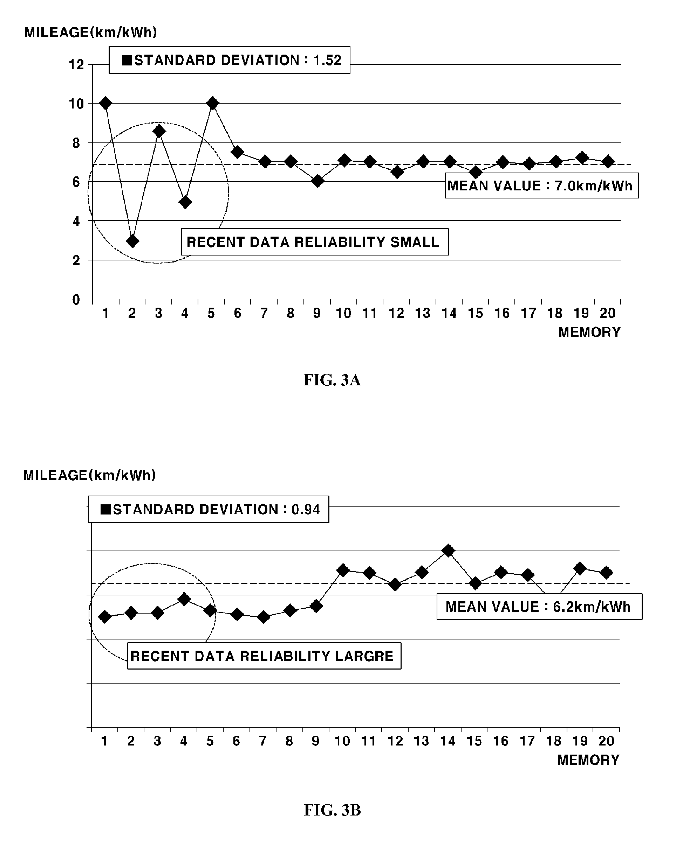

Moreover, when the standard deviation is a maximum value (e.g., 1.5 or greater), the mean value for the 1∼n past mileages may be predicted as the mileage, as shown in FIG. 3A. Further, when the standard deviation is the intermediate level, the mileage may be predicted by minimizing the reflection ratio of the past mileage of the 1∼n past mileages and simultaneously maximizing the reflection ratio of the recent mileage, as shown in Fig. 3B. In other words, when the standard deviation is the intermediate level, the initial mileage may be determined with minimizing the reflection ratio of the past mileage of the 1∼n past mileages and simultaneously maximizing the reflection ratio of the recent mileage from the mileage reflecting map.

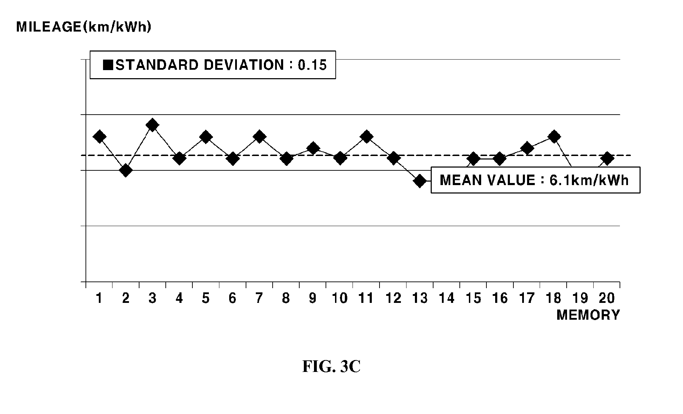

Further, when the standard deviation is less than the intermediate level (1.0), t the recent driving pattern of the driver may be determined to be similar to the past driving pattern of the driver, as shown in FIG. 3C, whereby the mileage may be predicted by maximizing the reflection ratio of the past mileage of the 1∼n past mileages. In other words, when the standard deviation is less than intermediate level (1.0), the recent driving pattern of the driver may be determined to be similar to the past driving pattern of the driver, whereby the initial mileage may be determined which maximizes the reflection ratio of the past mileage of 1∼n past mileages from the mileage reflecting map.

Additionally, when the standard deviation is a minimum value (0), the mileage may be predicted as the mean value for the 1∼n past mileages. Finally, by multiplying the mileage predicted based on the standard deviation as above and the battery available energy, the distance to empty may be calculated, and then the calculated distance to empty may be displayed to a driver on a cluster.

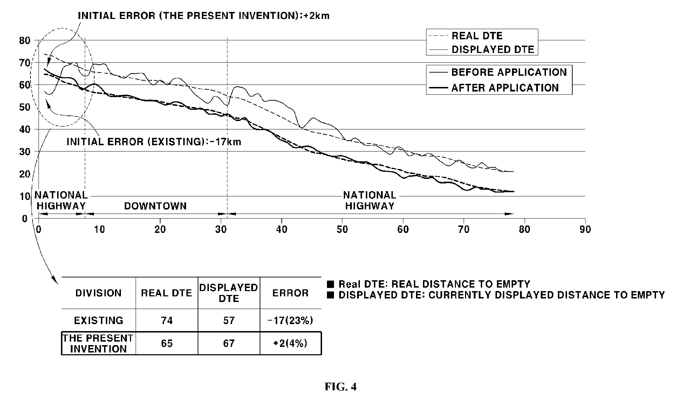

As a test example of the present invention, the distance to empty is measured by applying the existing method of calculating the distance to empty (e.g., non-application of the standard deviation) and a method of calculating the distance to empty of present invention (e.g., application of the standard deviation), respectively, with driving a predetermined distance (e.g., about 53km) in the auto working condition of an air-conditioning system, wherein the results thereof are shown in FIG 4.

As shown in FIG. 4, according to the existing method of the related art, the calculation value of the initial distance to empty has an error of 23% compared to the actual value of the initial distance to empty. However, as shown in FIG. 4, the method of the present shows that the calculation value of the initial distance to empty has an error of merely 4% compared to the actual value of the initial distance to empty, thus showing that the method of the present invention is capable of more accurately calculating the distance to empty compared to the method of the related art.

The present invention provides a following effect, by means of the technical constructions described above. According to the present invention, the distance to empty may be more accurately calculated by calculating the standard deviation of the past mileages stored in a memory and more accurately predicting the mileage for calculation of the distance to empty depending on the standard deviation.

The invention has been described in detail with reference to exemplary embodiments thereof. However, it will be appreciated by those skilled in the art that changes may be made in these exemplary embodiments without departing from the principles and spirit of the invention, the scope of which is defined in the appended claims and their equivalents.

## Claims

1. A method for predicting a distance to empty of an electric vehicle, comprising:
storing, by a controller, 1∼n past mileages in a memory;
calculating, by the controller, standard deviation for the 1∼n past mileages;
predicting, by the controller, a mileage by discriminately reflecting the 1∼n past mileages based on the standard deviation; and
calculating, by the controller, the distance to empty by multiplying the predicted mileage and battery available energy.

2. The method of claim 1, wherein, in the prediction of a mileage, when the standard deviation is greater than an intermediate level, the mileage is predicted by minimizing reflection ratio of a recent mileage of the 1∼n past mileages.

3. The method of claim 1, wherein, in the prediction of a mileage, the mileage is predicted as a mean value for the 1∼n past mileages.

4. The method of claim 1, wherein, in the prediction of a mileage, when the standard deviation is an intermediate level, the mileage is predicted by minimizing the reflection ratio of the past mileage of the 1∼n past mileages and simultaneously maximizing the reflection ratio of a recent mileage.

5. The method of claim 1, wherein, in the prediction of a mileage, when the standard deviation is less than an intermediate level, mileage is predicted by maximizing the reflection ratio of the past mileage of the 1∼n past mileages.

6. The method of claim 1, wherein, in the prediction of a mileage, when the standard deviation is a minimum value, the mileage is predicted as a mean value for the 1∼n past mileages.

7. A system for predicting a distance to empty of an electric vehicle, comprising:
a memory configured to store program instructions; and
a processor configured to execute the program instructions, the program instru ctions when executed configured to:
store 1∼n past mileages in a memory;
calculate standard deviation for the 1∼n past mileages;
predict a mileage by discriminately reflecting the 1∼n past mileages based on the standard deviation; and
calculate the distance to empty by multiplying the predicted mileage and battery available energy.

8. The system of claim 7, wherein, in the prediction of a mileage, when the standard deviation is greater than an intermediate level, the mileage is predicted by minimizing reflection ratio of a recent mileage of the 1∼n past mileages.

9. The system of claim 7, wherein, in the prediction of a mileage, the mileage is predicted as a mean value for the 1∼n past mileages.

10. The system of claim 7, wherein, in the prediction of a mileage, when the standard deviation is an intermediate level, the mileage is predicted by minimizing the reflection ratio of the past mileage of the 1∼n past mileages and simultaneously maximizing the reflection ratio of a recent mileage.

11. The system of claim 7, wherein, in the prediction of a mileage, when the standard deviation is less than an intermediate level, mileage is predicted by maximizing the reflection ratio of the past mileage of the 1∼n past mileages.

12. The system of claim 7, wherein, in the prediction of a mileage, when the standard deviation is a minimum value, the mileage is predicted as a mean value for the 1∼n past mileages.

13. A non-transitory computer readable medium containing program instructions executed by a controller, the computer readable medium comprising:
program instructions that store 1∼n past mileages in a memory;
program instructions that calculate standard deviation for the 1∼n past mileages;
program instructions that predict a mileage by discriminately reflecting the 1∼n past mileages based on the standard deviation; and
program instructions that calculate the distance to empty by multiplying the predicted mileage and battery available energy.

14. The non-transitory computer readable medium of claim 13, wherein, in the prediction of a mileage, when the standard deviation is greater than an intermediate level, the mileage is predicted by minimizing reflection ratio of a recent mileage of the 1∼n past mileages.

15. The non-transitory computer readable medium of claim 13, wherein, in the prediction of a mileage, the mileage is predicted as a mean value for the 1∼n past mileages.

16. The non-transitory computer readable medium of claim 13, wherein, in the prediction of a mileage, when the standard deviation is an intermediate level, the mileage is predicted by minimizing the reflection ratio of the past mileage of the 1∼n past mileages and simultaneously maximizing the reflection ratio of a recent mileage.

17. The non-transitory computer readable medium of claim 13, wherein, in the prediction of a mileage, when the standard deviation is less than an intermediate level, mileage is predicted by maximizing the reflection ratio of the past mileage of the 1∼n past mileages.

18. The non-transitory computer readable medium of claim 13, wherein, in the prediction of a mileage, when the standard deviation is a minimum value, the mileage is predicted as a mean value for the 1∼n past mileages.
